# EUROPÄISCHE PATENTSCHRIFT

(11) **EP 2 420 691 B1**
(45) Veröffentlichungstag und Bekanntmachung des Hinweises auf die Patenterteilung: **16.01.2013**
(21) Anmeldenummer: 11175302.6
(22) Anmeldetag: 26.07.2011
(51) Int. Cl.: F16D 65/00, F16D 65/14, F16D 65/097

(54) **Belaghaltevorrichtung mit Schwingungstilger**
Surface holding device with vibration dampener
Dispositif de retenue de garniture avec réducteur de vibrations

(30) Priorität: 18.08.2010 DE 102010037034
(43) Veröffentlichungstag der Anmeldung: 22.02.2012
(73) Patentinhaber: TMD Friction Services GmbH, 51381 Leverkusen (DE)
(72) Erfinder: Hötzel, Dominik, 40629 Düsseldorf (DE)
(74) Vertreter: Müller, Eckhard

(56) Entgegenhaltungen:
- DE-B3- 10 249 464
- US-A- 4 235 314
- US-A- 4 513 844

## Beschreibung

Die Erfindung betrifft eine Belaghaltevorrichtung mit einer Belaghaltefeder, die dazu ausgebildet ist, einen Bremsbelag an Bauteilen einer Scheibenbremse, insbesondere an einem Betätigungskolben oder an einem Sattelgehäuse, - insbesondere wieder lösbar - zu befestigen.

Aus der DE 196 52 933 A1 ist eine Federanordnung bekannt, die als Belaghaltefeder für einen Bremsbelag ausgebildet ist. Belaghaltefedern dienen dazu, einen Bremsbelag an einem Bauteil einer Scheibenbremse, beispielsweise an einem Betätigungskolben, vorzugsweise wieder lösbar, zu befestigen.

Belaghaltefedern sind in unterschiedlichsten Ausführungsformen bekannt. Sie bestehen zumeist aus einem umgeformten Stanzteil. Hierzu sei beispielsweise auf DE 10 2007 020 467 A1 und auf DE 10 2007 032 967 B4 verwiesen.

Insbesondere durch eine ungleichmäßige Reibung zwischen einem Bremsbelag und einer Bremsscheibe, kann der Bremsbelag in Schwingungen versetzt werden, die als unangenehme und störende Geräusche wahrnehmbar sind. Oft werden insbesondere die Rückenplatte eines Bremsbelags oder auch angrenzende Bauteile einer Scheibenbremse jeweils in ihre Eigenschwingung versetzt.

Aus DE 297 24 807 U1 ist eine Einrichtung zum Dämpfen von Schwingungen an einem Bremsbelag einer Scheibenbremse bekannt. Die Einrichtung weist ein zylinderförmiges Tilgerelement auf, das reibend beweglich in mindestens einer Bohrung des Bremskolbens angeordnet ist und innenseitig Einlagerungen von Massekörpern in einem viskosen Medium aufweist. Die Belagschwingungen sollen durch die sich entsprechend in der viskosen Masse bewegenden Massekörper und die damit einhergehende Reibung des Tilgerelements im Bremskolben und durch die im Medium eingelagerten kleinen Massekörper bedämpft werden.

Auch aus DE 100 31 904 C1 ist ein Kolbeneinsatz zur Dämpfung von Bremsgeräuschen bekannt. Bei dieser Einrichtung ist ein Tilgerelement spielfrei und beabstandet von einer Druckplatte in mindestens einem Kolbenhohlraum angeordnet, wobei das Tilgerelement aus einem ausgehärteten Silikon besteht, in welches Massekörper eingelagert sind. Es ist vorgesehen, dass das Tilgerelement aufwendig mittels Unterdruck in eine Bohrung des Bremskolbens eingebracht wird.

Aus der DE 90 02 441 U1 ist eine Befestigungsvorrichtung für einen Massentilger bekannt. Die Befestigungsvorrichtung weist ein tellerförmiges Dämpfungsblech auf, das auf die Rückseite einer Bremsbacke geklebt ist. An die mit dem Dämpfungsblech versehene Bremsbacke kann ein als Tilgermasse fungierendes Einsatzteil angeclipst werden. Im Einbauzustand der Bremsbacke ist das Einsatzteil in einem Hohlraum des Bremskolbens derart angeordnet, dass es relativ zum Bremskolben schwingen kann.

Die bekannten Vorrichtungen zur Schwingungsdämpfung des Bremsbelags einer Scheibenbremse haben den Nachteil, dass ein Tilgerelement in einem aufwendigen Prozess formschlüssig und klemmend und/oder reibend in einer Bohrung eines Bremskolbens angeordnet werden muss. Ein beschädigungsfreies Entfernen des Tilgers ist nachteiligerweise nicht oder nur sehr aufwendig möglich. Da das Tilgerelement auf die Schwingungseigenschaften, insbesondere die Eigenfrequenz, des Bremsbelags abgestimmt sein muss, führt dies dazu, dass bei den bekannten Bremssystemen, die mit einem bekannten Tilgerelement ausgerüstet sind, stets und ausschließlich derselbe Typ von Bremsbelägen verwendet werden muss, um die Schwingungsdämpfungswirkung zu erreichen.

Eine gattungsgemäße Belaghaltevorrichtung geht z.B aus US-A-4 235 314 hervor.

Es ist daher die Aufgabe der vorliegenden Erfindung, eine technische Lösung anzugeben, die eine Schwingungsdämpfung für ein Bremssystem bereitstellt und die gleichzeitig eine einfache, aber dennoch zuverlässige Einbaubarkeit und/oder Austauschbarkeit ermöglicht.

Die Aufgabe wird durch eine Belaghaltevorrichtung gelöst, die dadurch gekennzeichnet ist, dass an der Belaghaltefeder zumindest ein Schwingungstilger angeordnet ist.

Die erfindungsgemäße Belaghaltevorrichtung stellt, außer ihrer Funktion einen Bremsbelag an einem Bauteil einer Scheibenbremse zu befestigen, zusätzlich die Funktion bereit, auftretende Schwingungen, insbesondere des Bremsbelages zu verhindern oder zumindest zu dämpfen.

Die Erfindung hat den ganz besonderen Vorteil, dass durch Austausch der gesamten Belaghaltevorrichtung oder durch Austausch des Schwingungstilgers der Belaghaltevorrichtung, eine Anpassbarkeit des Dämpfungssystems an die Schwingungseigenschaften der verwendeten Komponenten - insbesondere des Bremsbelags ermöglicht ist. Beispielsweise ist es möglich, in ein und demselben Bremssystem - je nach Anforderung - unterschiedliche Bremsbeläge - beispielsweise mit unterschiedlichen Reibmaterialien - einzusetzen und bei Einbau dieser Beläge jeweils an die Schwingungseigenschaften der zu verbindenden Bremsbeläge angepasste Belaghaltevorrichtungen und/oder geeignete und angepasste Schwingungstilger zu verwenden.

Die Erfindung ermöglicht vorteilhafterweise auch, bereits bestehende Bremssysteme durch Austausch der Belaghaltevorrichtung nachträglich mit einer Schwingungsdämpfung zu versehen.

Beispielsweise kann ein Verbindungselement vorgesehen sein, das den Schwingungstilger und die Belaghaltefeder verbindet. Hierdurch kann in vorteilhafter Weise insbesondere erreicht werden, dass die Verbindung unabhängig vom Betätigungszustand der Bremse ist. Insbesondere kann in diesem Zusammenhang vorgesehen sein, dass die Verbindung des Schwingungstilgers zumindest im Wesentlichen kraftschlüssig zum Schwingungserreger, nämlich dem Bremsbelag, ist.

Bei einer effizient arbeitenden und dennoch langlebig ausführbaren Ausführungsform weist das Verbindungselement eine Feder, die insbesondere als Elastomerfeder und ganz insbesondere als Gummifeder ausgebildet sein kann, auf. Insbesondere eine als Elastomerfeder ausgebildete Ausführungsform des Verbindungselements weist in vorteilhafter und erfindungsgemäßer Weise besonders gute Dämpfungseigenschaften auf, weil ein solches Verbindungselement materialbedingt einen durch Streckung und Stauchung der Schwingung Energie entzieht und diese in Wärme umsetzt. Es ist selbstverständlich auch möglich, andere und/oder aufwendigere Verbindungselemente - die beispielsweise Öldämpfer aufweisen können - einzusetzen.

Bei einer besonders kompakt und robust ausführbaren Belaghaltevorrichtung ist vorgesehen, dass das Verbindungselement ringförmig ausgebildet ist. Alternativ oder zusätzlich kann vorgesehen sein, dass das Verbindungselement den Schwingungstilger umgreift.

Die Form und/oder die Größe und/oder die Verformbarkeit, insbesondere die Shore-Härte, des Verbindungselements ist vorzugsweise derart gewählt, dass das Verbindungselement - wie bereits ausgeführt - die Schwingung eines Bauteils der Scheibenbremse, insbesondere eines Bremsbelags, dämpft. Durch geeignete Wahl der Form und/oder der Größe und/oder der Verformbarkeit und/oder der Masse des Verbindungselements, kann auf einfache Weise eine Anpassung des Schwingungsdämpfungssystems der erfindungsgemäßen Belaghaltevorrichtung an die Schwingungseigenschaften des Bremssystems, in dem es verwendet werden soll, erreicht werden. Dabei kann auch ohne Austausch des Schwingungstilgers - allerdings auch in Kombination mit dem Austausch des Schwingungstilgers - eine Anpassung des Schwingungsdämpfungssystems an die Schwingungseigenschaften des Bremssystems, insbesondere des Bremsbelags, erreichten werden.

Bei einer besonders vorteilhaften und sehr effizient wirkenden Ausführungsform der erfindungsgemäßen Belaghaltevorrichtung sind die Form und/oder die Größe und/oder die Masse und/oder die Verformbarkeit, insbesondere die Shore-Härte, des Verbindungselements und/oder des Schwingungstilgers derart gewählt, dass der Schwingungstilger allein und/oder das System aus Schwingungstilger und Verbindungselement eine Eigenschwingungsfrequenz aufweist, aufgrund derer er bzw. es geeignet ist, der Schwingung eines Bauteils einer Scheibenbremse, insbesondere eines Bremsbelags, entgegenzuwirken.

Bei einer vorteilhaften und kompakt ausführbaren Ausführungsform der erfindungsgemäßen Belaghaltevorrichtung ist der Schwingungstilger zumindest teilweise innerhalb einer U-förmigen Einbuchtung der Belaghaltefeder angeordnet.

Besonders vorteilhaft kann vorgesehen sein, dass der Schwingungstilger im Einbauzustand der Belaghaltevorrichtung zumindest teilweise innerhalb eines Betätigungskolbens einer Bremsvorrichtung angeordnet. Dies insbesondere, ohne die Innenwände des Betätigungskolbens direkt zu berühren, was eine leichte Austauschbarkeit der Belaghaltevorrichtung und/oder des Schwingungstilgers erlaubt und darüber hinaus ermöglicht, dass der Schwingungstilger ungehindert schwingen kann.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
Fig. 1 eine erfindungsgemäße Belaghaltevorrichtung in einer Schnittdarstellung und
Fig. 2 eine Schnittdarstellung einer erfindungsgemäßen Bremsvorrichtung mit einer erfindungsgemäßen Belaghaltevorrichtung.

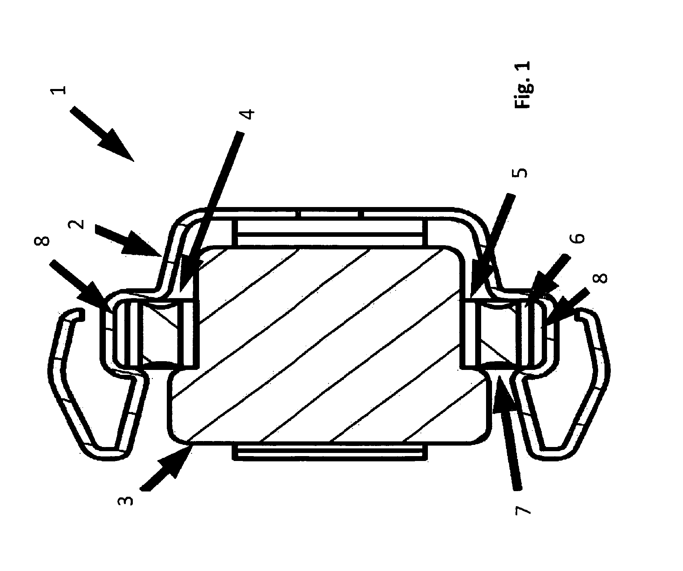

Fig. 1 zeigt eine erfindungsgemäße Belaghaltevorrichtung 1 mit einer Belaghaltefeder 2, die dazu ausgebildet ist, einen hier nicht dargestellten Bremsbelag an Bauteilen einer Scheibenbremse, insbesondere an einem Betätigungskolben, wieder lösbar zu befestigen. Die Belaghaltefeder ist im Mittelteil U-förmig gebogen und weist einen Schwingungstilger 3 innerhalb der U-förmigen Einbuchtung auf. Der Schwingungstilger 3 ist mittels eines Verbindungselements 4 mit der Belaghaltefeder 2 verbunden. Das Verbindungselement 4 ist insgesamt ringförmig ausgebildet und weist einen Innenring 5 und einen Außenring 6 auf. Zwischen dem Innenring 5 und dem Außenring 6 ist eine ringförmige Gummifeder 7 angeordnet. Das Verbindungselement 4 umgreift den Schwingungstilger 3.

Die Belaghaltefeder 2 weist taschenförmige Umbiegungen 8 auf, in die das ringförmige Verbindungselement 4 eingeklemmt ist.

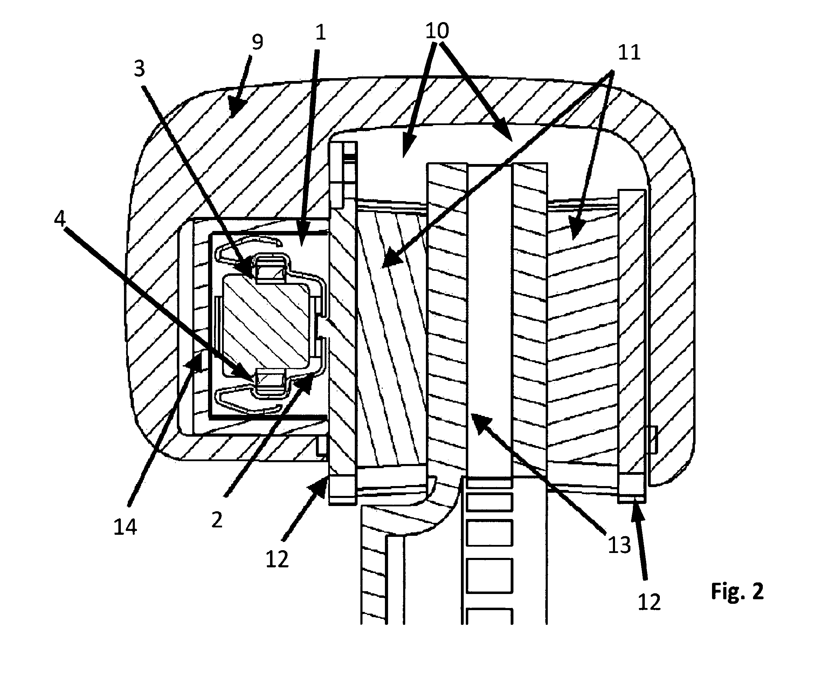

Fig. 2 zeigt eine erfindungsgemäße Bremsvorrichtung mit einem Bremsengehäuse 9 und mit Bremsbelägen 10, die jeweils einen Reibbelag 11 und eine Bremsbelagrückseite 12 aufweisen. Zwischen den Bremsbelägen 10 ist eine Bremsscheibe 13 angeordnet. Durch Verschieben eines Betätigungskolbens 14 kann die Bremsscheibe 13 zwischen den Bremsbelägen 10 eingeklemmt werden, um Bremswirkung zu erzielen.

In einem Hohlraum des Betätigungskolbens 14 ist eine erfindungsgemäße Belaghaltevorrichtung 1 angeordnet, die u. a. die Aufgabe hat, mit Hilfe einer Belaghaltefeder 2 einen der Bremsbeläge 10 in seiner Relativposition zum Betätigungskolben 14 zu fixieren. Darüber hinaus weist die Belaghaltevorrichtung 1 einen Schwingungstilger 3 auf, der, wie bereits in Bezug auf Fig. 1 geschildert, gehaltert ist und der die Aufgabe hat ungewollte Schwingungen des Bremsbelages und/oder der Bremsbelag-Scheibenkombination 10, 13 zu vermeiden oder zu verhindern.

Die Form, die Masse, die Größe und die Verformbarkeit des Verbindungselements 4 und des Schwingungstilgers 3 sind derart gewählt, dass der Schwingungstilger - insbesondere aufgrund seiner durch Festlegung dieser Größen bedingte Eigenschwingungsfrequenz - eine Schwingung des angrenzenden Bremsbelags 10 entgegenwirkt oder diese zumindest dämpft.

### Bezugszeichenliste

- 1: Belaghaltevorrichtung
- 2: Belaghaltefeder
- 3: Schwingungstilger
- 4: Verbindungselement
- 5: Innenring
- 6: Außenring
- 7: Gummifeder
- 8: U-förmige Umbiegung der Belaghaltefeder 1
- 9: Bremsengehäuse
- 10: Bremsbelag
- 11: Reibbelag
- 12: Bremsbelagrückseite
- 13: Bremsscheibe
- 14: Betätigungskolben

## Patentansprüche

1. Belaghaltevorrichtung (1) mit einer Belaghaltefeder (2), die dazu ausgebildet ist, einen Bremsbelag an Bauteilen einer Scheibenbremse, insbesondere an einem Betätigungskolben oder an einem Sattelgehäuse, - insbesondere wieder lösbar - zu befestigen, **dadurch gekennzeichnet, dass** an der Belaghaltefeder zumindest ein Schwingungstilger angeordnet ist.

2. Belaghaltevorrichtung (1) nach Anspruch 1, **dadurch gekennzeichnet, dass** zumindest ein Verbindungselement (4) vorgesehen ist, das den Schwingungstilger und die Belaghaltefeder verbindet.

3. Belaghaltevorrichtung (1) nach Anspruch 2, **dadurch gekennzeichnet, dass** das Verbindungselement (4) eine Feder, insbesondere eine Elastomerfeder, ganz insbesondere eine Gummifeder (7), aufweist.

4. Belaghaltevorrichtung (1) nach einem der Ansprüche 2 oder 3, **dadurch gekennzeichnet, dass** das Verbindungselement (4) ringförmig ausgebildet ist und/oder dass das Verbindungselement (4) den Schwingungstilger umgreift.

5. Belaghaltevorrichtung (1) nach einem der Ansprüche 1 bis 4, **dadurch gekennzeichnet, dass** die Form und/oder die Größe und/oder die Verformbarkeit und/oder die Masse, insbesondere die Shorehärte, des Verbindungselements (4) und/oder des Schwingungstilgers (3) derart gewählt sind, dass der Schwingungstilger (3) eine Eigenschwingungsfrequenz aufweist, auf Grund derer er geeignet ist, der Schwingung eines Bauteiles einer Scheibenbremse, insbesondere eines Bremsbelages (10), entgegenzuwirken.

6. Belaghaltevorrichtung (1) nach einem der Ansprüche 1 bis 5, **dadurch gekennzeichnet, dass** die Form und/oder die Größe und/oder die Verformbarkeit und/oder die Masse, insbesondere die Shorehärte, des Verbindungselements (4) derart gewählt sind, dass das Verbindungselement (4) die Schwingung eines Bauteiles einer Scheibenbremse, insbesondere eines Bremsbelages (10), dämpft.

7. Belaghaltevorrichtung (1) nach einem der Ansprüche 1 bis 6, **dadurch gekennzeichnet, dass** der Schwingungstilger (3) zumindest teilweise innerhalb einer u-förmigen Ausbildung der Belaghaltefeder (2) angeordnet ist.

8. Bremsvorrichtung mit einer Belaghaltevorrichtung (1) nach einem der Ansprüche 1 bis 7.

9. Bremsvorrichtung nach Anspruch 8, **dadurch gekennzeichnet, dass** der Schwingungstilger (3) zumindest teilweise innerhalb eines Betätigungskolbens (14) angeordnet ist.

## Claims

1. Lining holding device (1) with a lining retaining spring (2), which is constructed for the purpose of fastening, particularly so as to be detachable again, a brake lining to components of a disc brake, particularly to an actuating piston or to a calliper housing, **characterised in that** at least one vibration damper is arranged at the lining retaining spring.

2. Lining holding device (1) according to claim 1, **characterised in that** at least one connecting element (4), which connects the vibration damper and the lining retaining spring, is provided.

3. Lining holding device (1) according to claim 2, **characterised in that** the connecting element (4) comprises a spring, particularly a elastomeric spring, specifically a rubber spring (7).

4. Lining holding device (1) according to one of claims 2 and 3, **characterised in that** the connecting element (4) is of annular construction and/or that the connecting element (4) engages around the vibration damper.

5. Lining holding device (1) according to any one of claims 1 to 4, **characterised in that** the shape and/or size and/or deformability and/or mass, particular Shore hardness, of the connecting element (4) and/or the vibration damper (3) is or are so selected that the vibration damper (3) has a natural vibration frequency on the basis of which it is suitable for counteracting the vibration of a component of a disc brake, particularly a brake lining (10).

6. Lining holding device (1) according to any one of claims 1 to 5, **characterised in that** the shape and/or size and/or deformability and/or mass, particular Shore hardness, of the connecting element (4) and/or the vibration damper (3) is or are so selected that the connecting element (4) damps the vibration of a component of a disc brake, particularly a brake lining (10).

7. Lining holding device (1) according to any one of claims 1 to 6, **characterised in that** the vibration damper (3) is arranged at least partly within a U-shaped formation of the lining retaining spring (2).

8. Brake device with a lining holding device (1) according to any one of claims 1 to 7.

9. Brake device according to claim 8, **characterised in that** the vibration damper (3) is arranged at least partly within an actuating piston (14).

## Revendications

1. Dispositif de retenue de garniture (1), comprenant un ressort de retenue de garniture (2) qui est conçu de manière à fixer, en particulier de manière à nouveau amovible, une garniture de frein à des composants d'un frein à disque, en particulier à un piston d'actionnement ou à un boîtier d'étrier, **caractérisé en ce qu'**au moins un réducteur de vibrations est disposé sur le ressort de retenue de garniture.

2. Dispositif de retenue de garniture (1) selon la revendication 1, **caractérisé en ce qu'**au moins un élément de liaison (4) est prévu, lequel relie le réducteur de vibrations et le ressort de retenue de garniture.

3. Dispositif de retenue de garniture (1) selon la revendication 2, **caractérisé en ce que** l'élément de liaison (4) comprend un ressort, en particulier un ressort en élastomère, tout particulièrement un ressort en caoutchouc (7).

4. Dispositif de retenue de garniture (1) selon la revendication 2 ou 3, **caractérisé en ce que** l'élément de liaison (4) est annulaire et/ou **en ce que** l'élément de liaison (4) vient en prise autour du réducteur de vibrations.

5. Dispositif de retenue de garniture (1) selon l'une quelconque des revendications 1 à 4, **caractérisé en ce que** la forme et/ou la taille et/ou la déformabilité et/ou la masse, en particulier la dureté Shore, de l'élément de liaison (4) et/ou du réducteur de vibrations (3) sont choisies de telle sorte que le réducteur de vibrations (3) présente une fréquence de vibration propre en raison de laquelle il est approprié pour entraver la vibration d'un composant d'un frein à disque, en particulier d'une garniture de frein (10).

6. Dispositif de retenue de garniture (1) selon l'une quelconque des revendications 1 à 5, **caractérisé en ce que** la forme et/ou la taille et/ou la déformabilité et/ou la masse, en particulier la dureté Shore, de l'élément de liaison (4) sont choisies de telle sorte que l'élément de liaison (4) amortisse la vibration d'un composant d'un frein à disque, en particulier d'une garniture de frein (10).

7. Dispositif de retenue de garniture (1) selon l'une quelconque des revendications 1 à 6, **caractérisé en ce que** le réducteur de vibrations (3) est disposé au moins en partie à l'intérieur d'une formation en forme de U du ressort de retenue de garniture (2).

8. Dispositif de freinage comprenant un dispositif de retenue de garniture (1) selon l'une quelconque des revendications 1 à 7.

9. Dispositif de freinage selon la revendication 8, **caractérisé en ce que** le réducteur de vibrations (3) est disposé au moins en partie à l'intérieur d'un piston d'actionnement (14).
